# EUROPEAN PATENT SPECIFICATION

(11) **EP 2 080 560 B1**
(45) Date of publication and mention of the grant of the patent: **03.08.2011**
(21) Application number: 09150801.0
(22) Date of filing: 16.01.2009
(51) Int. Cl.: B05B 7/00, B05B 11/00, A47K 5/14, B01F 3/04, B01F 5/06, B01F 5/02, G01F 11/08

(54) **Foam dispenser with liquid tube pump refill unit**
Schaumabgabevorrichtung mit Nachfüllpackung, die eine aus einem elastischen Schlauch bestehende Flüssigkeitspumpe enthält
Distributeur de mousse avec recharge comprenant un tube déformable comme pompe à liquide

(30) Priority: 18.01.2008 US 9531
(43) Date of publication of application: 22.07.2009
(73) Proprietor: GOJO Industries, Inc., Akron, OH 44311 (US)
(72) Inventor: Ciavarella, Nick E., Seven Hills, OH 44131 (US); Hayes, David D., Wooster, OH 44691 (US); Reynolds, Aaron R., North Canton, OH 44720 (US)
(74) Representative: Makovski, Priscilla Mary

(56) References cited:
- EP-A- 0 990 412
- EP-A- 1 147 818
- WO-A-2005/107699
- DE-A1- 10 305 441
- FR-A- 2 734 027
- GB-A- 2 259 653
- JP-A- 8 038 381
- US-A- 5 462 208
- US-A- 5 944 227

## Description

### TECHNICAL FIELD

The invention herein resides in the art of foam dispensers wherein a foamable liquid and air are combined to dispense a foam product. More particularly, the invention relates to a dispenser wherein a liquid tube pump is provided as part of a disposable refill unit containing the liquid, and an air pump is provided as part of the dispenser housing.

### BACKGROUND OF THE INVENTION

For many years, it has been known to dispense liquids, such as soaps, sanitizers, cleansers, disinfectants, and the like from a dispenser housing maintaining a refill unit that holds the liquid and provides the pump mechanisms for dispensing the liquid. The pump mechanism employed with such dispensers has typically been a liquid pump, simply emitting a predetermined quantity of the liquid upon movement of an actuator. Recently, for purposes of effectiveness and economy, it has become desirable to dispense the liquids in the form of foam, generated by the interjection of air into the liquid. Accordingly, the standard liquid pump has given way to a foam generating pump, which necessarily requires means for combining the air and liquid in such a manner as to generate the desired foam. However, foam generating pumps are more expensive than liquid dispensing pumps, necessarily increasing the cost of a refill unit that includes the pump mechanism.

Typically, foam pumps include an air pump portion and a fluid pump portion - - the two requiring communication to ultimately create the foam. It has been found that the air pump portion required for pumping the air does not wear out and degrade as quickly as the liquid pump portion required for pumping the liquid. Additionally, the air pump portion mainly comes into contact with air and thus stays more sanitary, making its periodic replacement less necessary than in the case of the liquid pump portion and the foam generating portion of a foam dispenser. Accordingly, it has been determined that it is not as necessary to replace the air pump as it is to replace the liquid pump and foam generating portion of the dispenser when replacement of the refill unit is necessary. JP 8 38 381 discloses a foam dispenser comprising a liquid pump of the bellows type and US 5 944 227 as well as US 6 129 155 disclose dispensers comprising a tube pump. Accordingly, there is a need in the art for foam dispensing systems that employ a disposable liquid pump and a more permanent air pump.

### SUMMARY OF THE INVENTION

In light of the foregoing, this invention provides a dispenser including a housing and a refill unit as defined in claim 1. The housing includes an air bellows having and expanded volume and a compressed volume and retaining its expanded volume when the dispenser is not being actuated. The housing further includes a container support, a pump anvil, and a push bar. The push bar provides a pump plate portion and an air bellows actuator, and is capable of reciprocal movement toward and away from the pump anvil. The refill unit includes a container holding a foamable liquid, and a tube pump fluidly communicating with the foamable liquid in the container. The tube pump includes a collapsible tube, and the flow of foamable liquid into and out of the collapsible tube is regulated by a tube pump inlet valve and a tube pump outlet valve. The container fluidly communicates with the collapsible tube through the tube pump inlet valve. The refill unit further includes a mixing unit, and the collapsible tube communicates with the mixing unit through the tube pump outlet valve. The mixing unit includes an air bellows adaptor that is secured to an air outlet of the air bellows to fluidly communicate with the air bellows through an air bellows valve. The dispenser is actuated by moving the push bar toward the pump anvil, with such movement squeezing the collapsible tube between the push plate portion and the pump anvil to force foamable liquid therein through the tube pump outlet valve and into the mixing unit, such movement also causing the air bellows actuator to move the air bellows to its compressed volume to force air therein through the air bellows outlet valve and into the mixing unit.

Although the various elements of the dispenser as summarized above include particular elements as part of either a housing or a refill unit, this invention is not limited thereto or thereby, and it should be appreciated that the various dispenser elements may be provided in other ways, provided the various elements interact and function as taught herein.

### DESCRIPTION OF THE DRAWINGS

Fig. 1 is cross sectional view of an embodiment of a dispenser of this invention; and
Fig. 2 is a cross sectional view of a mixing cartridge.

### DETAILED DESCRIPTION OF THE INVENTION

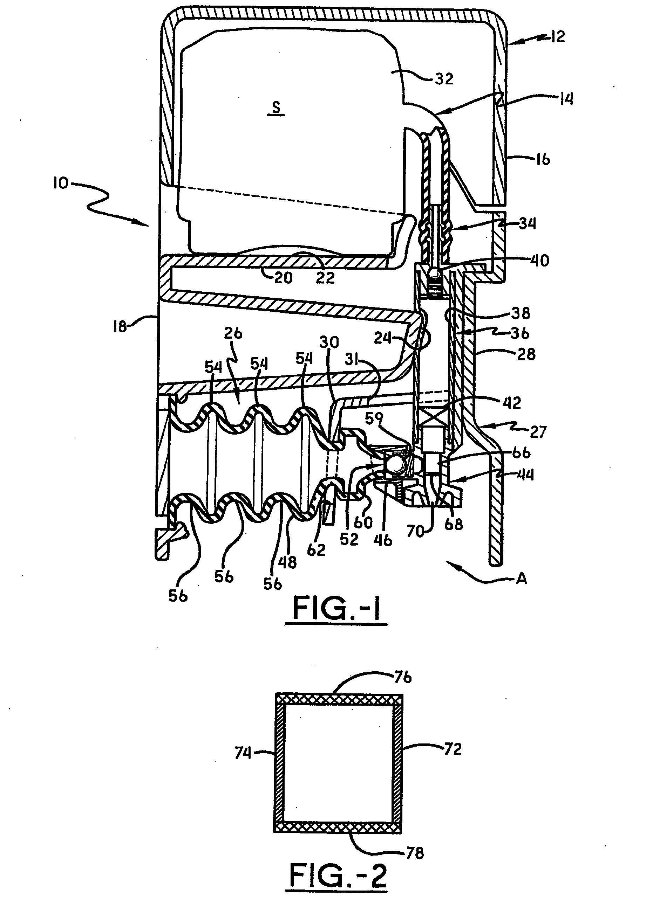

With reference to Fig. 1, the dispenser of this invention is shown and designated by the numeral 10. The dispenser 10 includes a housing 12 adapted to receive and hold a refill unit 14. Although the housing may take other forms, in this embodiment, the housing 12 is of the common type that includes a cover 16 secured to a backplate 18. A container support 20 is provided as part of backplate 18, here, in the form of a ledge 22. A pump anvil 24 is provided below the ledge 22, and an air bellows 26 extends outwardly from backplate 18 below the pump anvil 24. The cover 16 includes a push bar 27, which, when the cover 16 is closed on backplate 18, aligns over both the pump anvil 24 and the air bellows 26. More particularly, the push bar 27 provides a pump plate portion 28, which aligns with the pump anvil 24, and an air bellows actuator 30 that extends toward and connects to air bellows 26.

The refill unit 14 provides a container 32 holding a foamable liquid S. It is a collapsible container as known in the art. The container 32 is placed in the housing 12 on the container support 20. A dispensing tube 34 extends down from the container 16, and feeds foamable liquid S from container 16 to a tube pump 36. The tube pump 36 includes a collapsible tube 38 positioned between the pump anvil 24 and the push plate portion 28 of the push bar 27 and is preferably secured to push bar 27 to move therewith. A tube pump inlet valve 40 regulates flow of the foamable liquid S into the collapsible tube 38, and a tube pump outlet valve 42 regulates the flow of foamable liquid S out of the collapsible tube 38 and into a mixing unit 44. These valves are shown as common spring biased ball valves, but other valves may be used to join with an air source. The mixing unit 44 includes an air bellows adaptor 46 extending to mate with the air bellows 26.

The air bellows 26 includes a bellows body 48 that is sealed to backplate 18 at base 50, and is open at outlet 52. The bellows body 48 is corrugated, as at ridges 54 and valleys 56, and is made of a material that provides the bellows body 48 with the ability to reversibly collapse and extend between a compressed volume and an expanded volume. The air bellows adaptor 46 of the mixing unit 44 is sealed around the outlet 52 of the air bellows 26, and the air bellows 26 fluidly communicates with the mixing unit 44 through an air bellows valve 59 (again as a ball valve, though not limited thereto) provided as part of the mixing unit 44. The air bellows actuator 30 extends toward air bellows 26 and bypasses the tube pump 36 at an aperture 31. A mount ridge 60 of bellows body 48 is fed through an aperture 62 in the air bellows actuator 30 so that the air bellows actuator 30 will impact the first ridge 54 when urged in the direction of arrow A.

When the refill unit 14 is properly mounted in the housing 12 and the cover 16, the dispenser 10 is actuated to dispense a foam product by moving the push bar 27 in the direction of arrow A. By moving the push bar 27 in the direction of arrow A, the collapsible tube 38 is squeezed between the push plate portion 28 of the push bar 27 and the pump anvil 24. This forces foamable liquid in the collapsible tube 38 through the tube pump outlet valve 42 and into the mixing unit 44. This movement of the push bar 27 also causes the air bellows actuator 30 to press against the first ridge 54 of the bellows body 48, thus compressing the air bellows 26 to its compressed volume to force air therein through the outlet 52 of air bellows 46 and through the air bellows valve 59 into the premix passage 66 of the mixing unit 44. Thus, foamable liquid S and air mix at the premix chamber 66 to form a coarse mixture. During actuation, this coarse mixture is forced through a mesh screen 68 to homogenize mixture and create a high quality foam product that is dispensed at the outlet 70. As can be seen in Fig. 2 the mesh screen 68 can be replaced with a mixing cartridge 72, which includes a hollow tube 74 bounded on both ends by mesh screens 76 and 78.

In light of the foregoing, it should be apparent that the present invention improves the art by providing a foam dispenser having a liquid tube pump refill unit that is separate and distinct from an air pump unit, namely an air bellows. While a particular embodiment of this invention has been the focus for purposes of disclosing the invention, it should be appreciated that this invention can be modified in various ways without departing from the scope of the claims. Thus, this invention is not to be limited to or by any particular embodiment, rather, the claims will serve to define the invention.

## Claims

1. A dispenser comprising:
an air bellows (26) having an expanded volume and a compressed volume and retaining said expanded volume when said dispenser (10) is not being actuated, said air bellows (26) providing an air outlet (52),
a dispenser housing (12) including a container support (20),
a pump anvil (24), and
a push bar (27) having a push plate portion (28) and an air bellows actuator (30), said push bar (27) being capable of reciprocal movement toward and away from said pump anvil (24); and
a container (32) holding a foamable liquid, said container being mounted on said container support (20) of said housing (12),
a mixing unit (44) having an air bellows adaptor (46) secured to said air outlet (52) of said air bellows (26) to fluidly communicate with said air bellows, said mixing unit (44) providing an air bellows valve (59),
a tube pump (36) including:
a collapsible tube (38) positioned between said pump anvil (24) and
said push plate portion (28) of said push bar (27),
a tube pump inlet (40) valve, said container fluidly communicating with said collapsible tube (38) through said tube pump
inlet valve (40), and
a tube pump outlet valve (42), said collapsible tube fluidly communicating with said mixing unit (44) through said tube pump outlet valve (42),
wherein the dispenser (10) is actuated by moving said push bar (27) toward said pump anvil (24), with such movement squeezing said collapsible tube (38) between said push plate portion (28) and said pump anvil (24) to force foamable liquid therein through said tube pump outlet valve (42) and into said mixing unit (44), such movement also causing said air bellows actuator (30) to move said air bellows (26) to its compressed volume to force air therein through said air bellows valve and into said mixing unit (44).

2. The dispenser of claim 1 wherein the air bellows (26), container support (20), pump anvil (24), and push bar (27) are provided as part of a housing (12), and wherein the container (32), mixing unit (44), and tube pump (36) are provided as part of refill (14) unit separate and distinct from the said housing (12).

## Patentansprüche

1. Spender, umfassend:
einen Luftbalg (26), welcher ein expandiertes Volumen und ein komprimiertes Volumen aufweist und das expandierte Volumen beibehält, wenn der Spender (10) nicht betätigt wird, wobei der Luftbalg (26) einen Luftauslass (52) bereitstellt, ein Spendergehäuse (12), enthaltend einen Behälterträger (20),
einen Pumpamboss (24), und
einen Druckbalken (27), welcher einen Druckplattenteil (28) und einen Luftbalgbetätiger (30) aufweist, wobei der Druckbalken (27) zu einer wechselseitigen Bewegung zu und weg von dem Pumpamboss (24) fähig ist, und
einen Behälter (32), welcher eine schäumbare Flüssigkeit enthält, wobei der Behälter auf dem Behälterträger (20) des Gehäuses (12) montiert ist,
eine Mischeinheit (44), welche einen Luftbalgadapter (46) aufweist, welcher an dem Luftauslass (52) des Luftbalgs (26) befestigt ist, um mit dem Luftbalg in Strömungsverbindung zu stehen, wobei die Mischeinheit (44) ein Luftbalgventil (59) bereitstellt,
eine Schlauchpumpe (36), enthaltend:
einen Quetschschlauch (38), welcher zwischen dem Pumpamboss (24) und dem Druckplattenteil (28) des Druckbalkens (27) positioniert ist,
ein Schlauchpumpeneinlassventil (40), wobei der Behälter mit dem Quetschschlauch (38) durch das Schlauchpumpeneinlassventil (40) in Strömungsverbindung steht, und
ein Schlauchpumpenauslassventil (42), wobei der Quetschschlauch mit der Mischeinheit (44) durch das Schlauchpumpenauslassventil (42) in Strömungsverbindung steht,
wobei der Spender (10) durch Bewegen des Druckbalkens (27) in Richtung des Pumpambosses (24) betätigt wird, wobei eine solche Bewegung den Quetschschlauch (38) zwischen dem Druckplattenteil (28) und dem Pumpamboss (24) einquetscht, um schäumbare Flüssigkeit darin durch das Schlauchpumpenauslassventil (42) und in die Mischeinheit (44) zu drängen, wobei eine solche Bewegung auch den Luftbalgbetätiger (30) veranlasst, den Luftbalg (26) zu seinem komprimierten Volumen zu bewegen, um Luft darin durch das Luftbalgventil und in die Mischeinheit (44) zu drängen.

2. Spender nach Anspruch 1, wobei der Luftbalg (26), der Behälterträger (20), der Pumpamboss (24) und der Druckbalken (27) als Teil eines Gehäuses (12) bereitgestellt sind, und wobei der Behälter (32), die Mischeinheit (44) und die Schlauchpumpe (36) als Teil einer von dem Gehäuse (12) separaten und verschiedenen Nachfülleinheit (14) bereitgestellt sind.

## Revendications

1. Distributeur comprenant :
un soufflet d'air (26) ayant un volume expansé et un volume comprimé et retenant ledit volume expansé lorsque ledit distributeur (10) n'est pas actionné, ledit soufflet d'air (26) fournissant une sortie d'air (52),
un boîtier de distributeur (12) comprenant un support de récipient (20), une enclume de pompe (24), et
une barre de poussée (27) ayant une partie de plaque de poussée (28) et un actionneur de soufflet d'air (30), ladite barre de poussée (27) pouvant effectuer un mouvement de va-et-vient vers et à distance de ladite enclume de pompe (24) ; et
un récipient (32) comprenant un liquide pouvant moussé, ledit récipient étant monté sur ledit support de récipient (20) dudit boîtier (12),
une unité de mélange (44) ayant un adaptateur de soufflet d'air (46) fixé sur ladite sortie d'air (52) dudit soufflet d'air (26) afin de communiquer de manière fluide avec ledit soufflet d'air, ladite unité de mélange (44) étant prévue avec une soupape de soufflet d'air (59),
une pompe à tube (36) comprenant :
un tube souple (38) positionné entre ladite enclume de pompe (24) et ladite partie de plaque de poussée (28) de ladite barre de poussée (27),
une soupape d'entrée (40) de la pompe à tube, ledit récipient étant en communication fluidique avec ledit tube souple (38) par le biais de ladite soupape d'entrée (40) de pompe à tube, et
une soupape de sortie (42) de la pompe à tube, ledit tube souple étant en communication fluidique avec ladite unité de mélange (44) par l'intermédiaire de ladite soupape de sortie (42) de pompe à tube,
dans lequel le distributeur (10) est actionné en déplaçant ladite barre de poussée (27) vers ladite enclume de pompe (24), avec un mouvement qui comprime ledit tube souple (38) entre ladite partie de plaque de poussée (28) et ladite enclume de pompe (24) afin de forcer le liquide pouvant mousser à l'intérieur de cette dernière par ladite soupape de sortie de pompe formant tube (42) et dans ladite unité de mélange (44), un tel mouvement amenant également ledit actionneur de soufflet d'air (30) à faire passer ledit soufflet d'air (26) à son volume comprimé afin de forcer l'air à l'intérieur de ce dernier à travers ladite soupape de soufflet d'air et dans ladite unité de mélange (44).

2. Distributeur selon la revendication 1, dans lequel le soufflet d'air (26), le support de récipient (20), l'enclume de pompe (24) et la barre de poussée (27) sont prévus en tant que partie d'un boîtier (12), et dans lequel le récipient (32), l'unité de mélange (44) et la pompe à tube (36) sont prévus en tant que partie d'une recharge (14) séparée et distincte dudit boîtier (12).
